# EUROPÄISCHE PATENTSCHRIFT

(11) **EP 2 096 074 B1**
(45) Veröffentlichungstag und Bekanntmachung des Hinweises auf die Patenterteilung: **14.09.2011**
(21) Anmeldenummer: 09002409.2
(22) Anmeldetag: 20.02.2009
(51) Int. Cl.: B66C 19/00, B66F 9/06, B62D 15/02, G01S 13/87

(54) **Vollautomatischer Portalhubstapler mit lokaler Funkortung und Laserlenkung**
Fully automated portal forklift with local radio location and laser steering
Chariot cavalier totalement automatique à positionnement radio local et direction laser

(30) Priorität: 28.02.2008 DE 102008011539
(43) Veröffentlichungstag der Anmeldung: 02.09.2009
(73) Patentinhaber: Noell Mobile Systems GmbH, 97080 Würzburg (DE)
(72) Erfinder: Bauer, Reinhard, Dipl.-Ing., 97280 Remlingen (DE)
(74) Vertreter: Hofmann, Matthias

(56) Entgegenhaltungen:
- EP-A- 2 060 472
- US-A- 5 375 059
- US-A1- 2005 242 052
- US-A1- 2007 222 674
- US-B1- 7 032 763
- WORLDCARGO NEWS: "Kalmar launches Autoshuttle" [Online] 31. Januar 2008 (2008-01-31), CARGONEWS , INET , XP002531894 Gefunden im Internet: URL:http://www.worldcargonews.com/htm/w200 80131.534586.htm> [gefunden am 2008-01-31] * das ganze Dokument *

## Beschreibung

Die Erfindung betrifft einen vollautomatischen fahrerlosen Portalhubstapler zum Transportieren und Stapeln von Frachtcontainern nach den Merkmalen des ersten Patentanspruches. Die Erfindung betrifft Portalhubstapler (Straddle Carrier), wie sie weltweit in Seehäfen und Containerterminals zum Transportieren und Stapeln von Frachtcontainern eingesetzt werden. Wie im Design Patent US D526,932 S gezeigt, bestehen sie aus 2 Fahrträgern mit Rädern, die rechts und links vom Containerstapel fahren, und darauf aufgesetzten senkrechten Stützen, die mit der darüber liegenden Maschinenbühne ein Portal bilden. Dieses Portal überfährt die Container und nimmt sie mit seinem Hubwerk auf oder setzt sie ab. Die Portalstapler haben dieselelektrischen oder dieselhydraulischen Antrieb und meist eine elektro-hydraulische Lenkung, wobei ein Lenkrechner nach Vorgabe des Lenkradeinschlags durch den Fahrer die hydraulischen Proportionalventile regelt, welche wiederum über Hydraulikzylinder die Räder zum Lenkeinschlag bewegen.
Auch fahrerlose, vollautomatische Straddle Carrier sind bekannt. Sie benutzen meist die allgemein bekannten Verfahren, wie Sie zur Navigation für alle autonomen, fahrerlosen Flurförderfahrzeuge angewandt werden, nämlich Einzelsysteme oder Kombinationen aus absoluten und relativen Navigationssensoren.

Als absolute Navigationssysteme sind bekannt:
- Satellitennavigation (differentielles GPS, DGPS),
- Radarnavigation (mit einem Radargerät mit rotierender Antenne auf dem Fahrzeug und ortsfesten passiven Reflektoren in der Umgebung)
- Transpondernavigation (mit im Boden vergrabenen Transpondern oder Magneten),

Als relative Navigationssysteme sind bekannt:
- Trägheitsnavigation (Gyroskope, Inertial Measuring Units (IMU)),
- Koppelnavigation mit Odometrie (Wegmessung über Drehgeber an den Rädern) und evtl. zusätzlicher Messung des Lenkwinkels über einen weiteren Geber an der Lenkung.

Zur vollautomatischen Lenkung, Fahrt und Positionierung müssen diese bekannten Navigationssysteme die Ortung der Fahrzeugposition sehr zuverlässig und im Zentimeterbereich ermöglichen. Die Navigation ist daher sehr aufwendig und die Anforderungen werden nur durch eine Kombination von verschiedenen redundantdiversitären, absoluten und relativen Navigationsverfahren miteinander erreicht.

In "Kalmar launches Autoshuttle" WorldCargo News ( 31. Jan.2008) http://www.worldcargonews.com/htm/w20080131.534586.htm wird eine Lösung für vollautomatische Straddle Carrier beschrieben. Das System arbeitet mit einer Transpondernavigation nach dem FROG-Verfahren, Free Ranging On Grid, bei dem Antennen bzw. Magnetfeldsensoren unter dem Fahrzeug angebracht sind, welche die in der Fahrbahn vergrabenen Transponder bzw. Magnete detektieren und damit die Odometrie nacheichen.

"An Autonomous Straddle Carrier for Movement of Shipping Containers" IEEE Robotics & Automation Magazine Sep. 2007 setzt eine Kombination aus DGPS (Satellitengestütztes globales Positioniersystem), rotierendem Millimeterwellen- Radar, Trägheitsnavigation und Odometrie ein. Die Ortungssignale dieser einzelnen Navigationssysteme werden in einem Sensorfusionsystem, bestehend aus Kalman-Filtern, zusammengeführt und zu einem zuverlässigen und genauen Ortungssignal ausgewertet, da jeder einzelne Sensor für sich alleine zu unzuverlässig oder zu ungenau für einen vollautomatischen Fahrbetrieb wäre.

In DE 103 36 084 A1 ist ein lokales Positionsmeßsystem mit einer Basisstation beschrieben, die an einem mobilen Objekt angeordnet ist, dessen Position zu bestimmen ist, während eine Vielzahl von Transpondern im Raum verteilt ist.

US 2005/242052 A1 offenbart einen vollautomatischen Portalhubstapler zum Transportieren und Stapeln von Frachtcontainern mit einem DGPS mit Datenfunk. Dabei handelt es sich nicht um ein lokales Funkortungssystem. Dem Dokument kann auch nicht entnommen werden, daß das Fahrzeug automatisch über einen Containerstapel lenkbar ist. Es kann zwar die Position des Lastaufnahmemittels bestimmt werden, eine vollautomatische fahrerlose Fahrzeuglenkung, die automatisch umschaltet, wenn das Fahrzeug eine bestimmte Position zum Containerstapel erreicht, geht allerdings nicht aus dem Dokument hervor.

US 2007/222674 A1 beschreibt das automatische Umschalten einer Transporteinrichtung. Das beschriebene Verfahren geht aber weder auf ein lokales Funkortungssystem ein noch finden Laserscanner in dem Dokument Erwähnung. Daher ist es für den Fachmann nicht naheliegend, dieses Dokument heranzuziehen, um den Zusammenhang mit einem anderen Dokument zur vorgeschlagenen Lösung zu langen.

Diese bekannten Verfahren zur vollautomatischen Fahrzeugführung bei Straddle Carriern haben einige Nachteile:

Lösungen wie die nach dem FROG-Verfahren haben den Nachteil, dass ein erheblicher Aufwand zur Installation der Magnete im Boden betrieben werden muss. Da die FROG-Antennen unter dem Fahrzeug nicht breiter als die beiden Fahrträger je Fahrzeugseite sein können, also etwa nur 70 cm, braucht man eine sehr hohe Transponderdichte, damit bei wegdriftender Odometrie rechtzeitig zur Nacheichung mindestens ein Transponder bzw. Magnet auf diesen 2 x 70 cm erfasst wird. Tausende Löcher müssen also auf allen Fahrbahnen des Terminals gebohrt werden, um die Magnete im Boden zu installieren. Abgesehen von diesem erheblichen Arbeitsaufwand wird der Umschlagbetrieb des Terminals während der Installation behindert.

Lösungen aus einer Kombination von DGPS mit Radar haben den Nachteil, dass bei dem auf dem Fahrzeug installierten Millimeterwellen- Navigationsradar mit rotierender Antenne die Mechanik aufwendig und störanfällig ist, und der notwendige Aufwand an Elektronik in einem solchen Radargerät wirtschaftlich kaum vertretbar ist.

Beide Lösungen haben außerdem den Nachteil, dass die Fahrzeuge, wenn sie über einem Containerstapel fahren, sich nicht am Containerstapel selbst orientieren, sondern an externen Marken, wie Satelliten bei DGPS, Reflektoren bei rotierendem Radar, Magneten bei FROG. Von Ihnen wird das Fahrzeug auf einer nur theoretischen, in der elektronischen Steuerung gespeicherten Bahn, auf welcher der Containerstapel theoretisch stehen sollte, entlang gelenkt. Sind die Container in Wirklichkeit nicht genau auf diesem theoretischen Pfad abgesetzt, kann es zu Anstreifungen, Kollisionen, Beschädigungen und damit Betriebsunterbrechungen kommen.

Es ist daher Aufgabe der Erfindung, die Nachteile des bekannten Standes der Technik zu beseitigen, und einen vollautomatischen, fahrerlosen Portalhubstapler mit vollautomatischer Lenkung anzugeben, dessen absolute Navigationssensorik einen erheblich geringeren Aufwand als bisherige Lösungen benötigt, und welcher sich bei Fahrt über dem Containerstapel direkt am Containerstapel selbst orientiert.

Diese Aufgabe wird durch die Merkmale des ersten Patentanspruches gelöst.

Unteransprüche geben vorteilhafte Ausgestaltungen der Erfindung wieder.

Die erfindungsgemäße Lösung sieht einen automatischen fahrerlosen Portalhubstapler zum Transportieren und Stapeln von Frachtcontainern vor, der mit mehreren verschiedenen Sensorsystemen zur Fahrzeugortung und Navigation ausgerüstet ist, wobei deren Signale in einem elektronischen Sensorfusionssystem ausgewertet und überwacht werden und die so ermittelten aktuellen Ortskoordinaten des Fahrzeuges dann einem System von elektrischen Steuerungen zum automatischen Lenken, Fahren und Positionieren des Fahrzeuges übermittelt werden, damit das Fahrzeug auf vorgegebenen, in einer elektronischen Bahnsteuerung gespeicherten Bahnen gelenkt, gefahren und positioniert wird, wobei Laserscanner zur automatischen Lenkung des Fahrzeuges über Containerstapeln dienen.

Erfindungsgemäß besteht eines der absoluten Sensorsysteme zur Fahrzeugortung aus einem lokalen Funkortungssystem, wobei eine mobile Funkbasisstation auf dem Fahrzeug angeordnet ist und eine Vielzahl von Funktranspondern ortsfest auf der zu befahrenden Betriebsfläche angeordnet ist. Vorteilhaft ist es, die Funktransponder erhöht über dem Boden anzuordnen. Weiterhin ist eine automatische Umschalteinrichtung vorhanden, die die Lenkung von einer automatischen Lenkung durch die Navigation auf die automatische Lenkung durch den Laserscanner dann umschaltet, wenn das Fahrzeug über oder kurz vor einem Containerstapel verfährt.

Der erfindungsgemäße Portalhubstapler kann mit einem Navigationssystem ausgerüstet sein, welches zusätzlich zum lokalen Funkortungs- und Positioniersystem besteht. Dazu kann ein mobiler DGPS-Empfänger des satellitengestützten differentiellen globalen Positioniersystems am Portalhubstapler angeordnet sein. Der Portalhubstapler weist weiterhin eine elektronische Bahnsteuerung auf. Weiterhin sind Laserscanner, vorzugsweise mindestens zwei Laserscanner, zur automatischen Lenkung vorhanden. Die Laserscanner liefern über ihre Umgebung Rohdaten und übermitteln diese an die Lasersteuerelektronik. Sofern der Portalhubstapler nahe genug an einem Container oder eine Containerwand herangefahren ist, gibt die Lasersteuerelektronik ein Umschaltsignal an die Umschalteinrichtung für den Lenkwinkel-Sollwert, so dass die Umschalteinrichtung ein Signal an den Lenkrechner gibt, dass dieser entweder auf die automatische Lenkung durch Laserscanner umschaltet, oder, sofern der Portalhubstapler sich von einem Container oder einer Containerwand entfernt, auf die automatische Lenkung durch Navigation und Bahnsteuerung. Die rechte und die linke Lasersteuerelektronik tauschen untereinander Plausibilitätssignale zur Containerdetektion aus. Weiterhin erfolgt von der Lasersteuerelektronik die Weitergabe eines Lenkwinkel-Sollwertes an den Umschalter und von diesem an den Lenkrechner. Die Lasersteuerelektronik gibt auch die Geschwindigkeitsbegrenzung für die Minimumsauswertung vor, die der Fahrwerkssteuerung zugeht, welche die Drehzahl-Sollwerte für die Fahrantriebe vorgibt. Den Fahrmotoren sind vorteilhafterweise Frequenzumrichter vorgeschaltet.

Lokale Funkortungssysteme sind in verschiedenen Dokumenten offenbart und müssen daher nicht weiter beschrieben werden. Anwendungen dieses Funkortungssystems für Fahrzeuge sind bekannt, insbesondere sind Funkortungssysteme auf Straddle Carriern bekannt, um die Container beim Transport zu verfolgen, Containertracking. Dieses Funkortungssystem ersetzt im vorliegenden Fall das DGPS, welches fallweise, z. B. beim Abschatten der Sichtverbindung zu den Satelliten durch Krane, Schiffe, hohe Gebäude oder ähnliches unzuverlässig oder ungenau arbeitet. Ein Straddle Carrier, der mit einem solchen lokalen Funkortungssystem auch automatisch gelenkt und gefahren wird, ist nicht bekannt.

DGPS-Systeme sind in verschiedenen Dokumenten beschrieben und werden daher nicht weiter erläutert. Die Daten aus dem Funkortungssystem und ggf. dem DGPS-Navigationssystem zur Fahrposition (x, y, Kurswinkel) werden als Istwerte zur Fahrzeugposition an ein Sensorfusionssystem gegeben. Das Sensorfusionssystem sieht vor, daß messfehlerbehaftete und unzuverlässige Signale von verschiedenen Sensoren durch spezielle Softwareprogramme, z. B. Kalman-Filter, ausgewertet werden und der daraus resultierende wahrscheinlichste Messwert für die aktuelle Fahrzeugposition errechnet wird. Bei einem einfachen System zur Sensorfusion werden Signale nur auf Plausibilität geprüft und die relativen Sensoren mit den Signalen der absoluten Sensoren nachgeeicht. Drehzahlgeber an den Fahrzeugrädern geben Wegmessdaten zur Sensorfusion, die aktuelle Istwerte an die Bahnsteuerung geben.

Auch die elektronische Bahnsteuerung ist aus der Robotertechnik bekannt und braucht daher im Detail hier nicht beschrieben zu werden. In Ihr sind die Bahnen, auf denen das Fahrzeug fahren soll, in Form von Bahnsegmenten oder Bahnpunkten gespeichert. Die Bahnsegmente können Geradenstücke, Kreisbögen oder Kurven sein und werden jeweils durch einen Anfangs- und Endpunkt begrenzt, dessen jeweilige Ortskoordinaten gespeichert sind. Die Bahnsteuerung vergleicht stets die Istposition des Fahrzeuges mit seiner Sollposition auf der Bahnkurve und errechnet daraus einen Lenkwinkelsollwert, der dem Lenkrechner zugeführt wird, und einen Geschwindigkeitssollwert, der der Fahrwerkssteuerung zugeführt wird. Somit wird das Fahrzeug auf den gespeicherten Bahnen entlang gelenkt und positioniert. Von der Bahnsteuerung wird der errechnete Lenkwinkel-Sollwert über eine Umschalteinrichtung an den Lenkrechner gegeben.

Die automatische Lenkung mit Laserscannern erfolgt in der Weise, dass bei Fahrt über den Containerstapel mindestens ein Laserscanner die Entfernung zu einer Containerwand aus verschiedenen Winkeln mißt und die Messwinkel einer elektronischen Steuerung zuführt, welche daraus einen Lenkwinkel-Sollwert für die elektronisch geregelte Fahrzeuglenkung errechnet. Der Laserscanner kann einen 2D-Laserscanner darstellen. Weiterhin kann dieser vorn im Fahrzeugträger angeordnet sein. Selbstverständlich kann für Rückwärtsfahrten ein Laserscanner auch am Fahrzeugträger hinten angeordnet sein. Weiterhin kann der Laserscanner oder der 2D-Laserscanner im Rammpuffer angeordnet sein. Als Laserscanner sind robuste, handelsübliche 2D-Laserscanner geeignet.
Die Laserlenkung wird nicht manuell vom Fahrer eingeschaltet, sondern von einer automatischen Umschalteinrichtung, sobald die Laserscanner einen Container detektiert haben. Die Detektion eines Containers und Unterscheidung von einem anderen, allgemeinen Hindernis erfolgt dadurch, dass jeweils der linke und der rechte Laserscanner die aktuelle Distanz zwischen dem Fahrträger des Straddle Carriers und der linken bzw. rechten Containerwand vermessen. Aus den beiden Messwerten kann die elektronische Steuerung die Breite des Hindernisses berechnen. Entspricht diese der international genormten Containerbreite, so kann das Fahrzeug weiter über den Container fahren. Falls nicht, wird das Fahrzeug gestoppt.

Die Umschalteinrichtung kann eine elektronische Steuerung oder ein Softwareprogramm sein, welches im Softwarepaket der Sensorfusion integriert ist. Solche Softwareprogramme zur Signalumschaltung sind relativ einfach zu programmieren und dem Fachmann hinreichend bekannt. Sie sind daher im Detail nicht beschrieben.

Im Folgenden soll die Erfindung an einem Ausführungsbeispiel und sechs Figuren erläutert werden. Die Figuren zeigen:
*Fig. 1*: Einen Portalhubstapler, welcher gerade einen Containerstapel überfährt, wobei ein Laserscanner am vorderen linken Fahrträger, geschützt im Rammpuffer, angebracht ist,
*Fig. 2*: Laserscanner in Figur 1
*Fig. 3*: Das Funkortungssystem des Portalhubstaplers mit Funktranspondern
*Fig. 4*: Schematische Darstellung der Softwarefunktionen des Navigations- und Fahrzeugleitsystems für einen automatischen, fahrerlosen Straddle Carrier, dargestellt als Blockschaltbild und Signalflussplan.
*Fig. 5*: Hardwarestruktur des elektronischen Steuerungssystems des erfindungsgemäßen Portalhubstaplers mit einer Bustopologie und allen Busteilnehmern an 3 CAN-Bussen.
*Fig. 6*: Prinzipdarstellung der Laserlenkung.

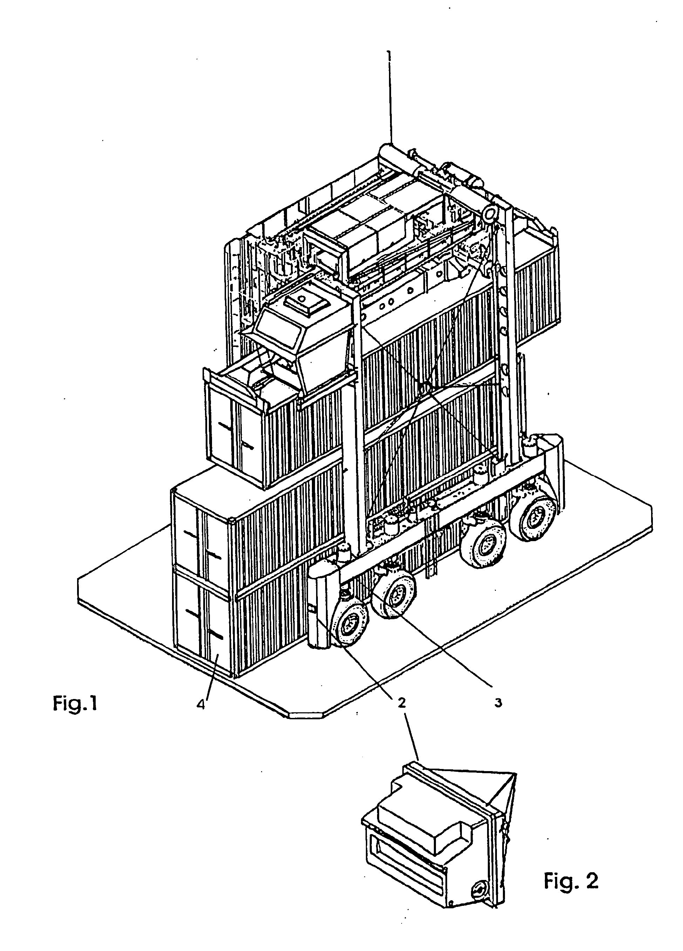

Die *Figur 1* zeigt einen Portalhubstapler 1 über einem Containerstapel 4, wobei der Laserscanner 2 am Fahrzeugträger 3 vorn in einem Rammschutz angeordnet ist. Der Portalhubstapler 1 überfährt gerade einen Containerstapel 4.

Der Laserscanner 2 ist in der *Figur 2* als Detail dargestellt. Er stellt einen 2D-Laserscanner dar.

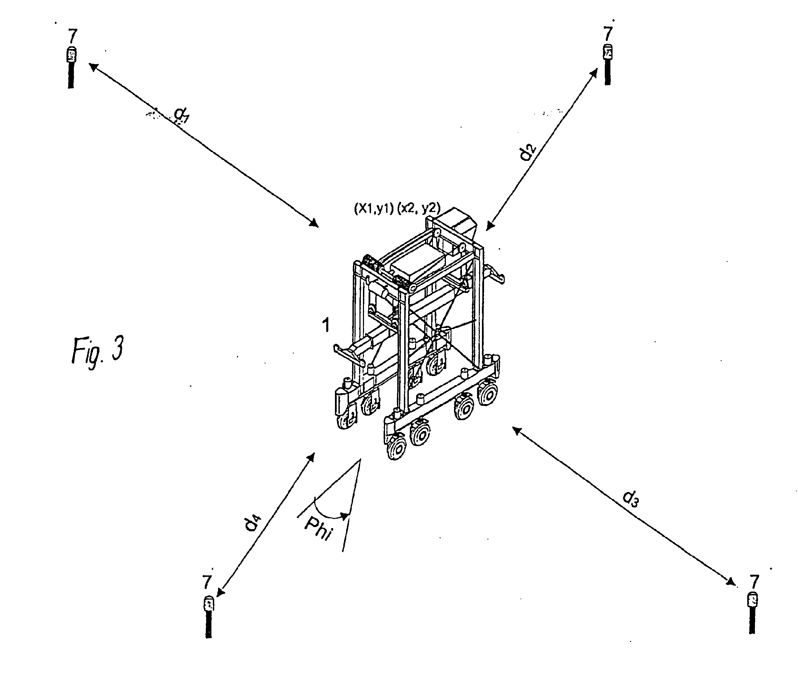

*Figur 3* zeigt einen Portalhubstapler 1, auf dem eine Basis-Funkstation angeordnet ist. Auf Masten in der Umgebung des Transportfahrzeuges 1 sind Funktransponder 7 angeordnet, die über Signale (d1, d2, d3, d4) mit der Basis-Funkstation in Verbindung stehen.

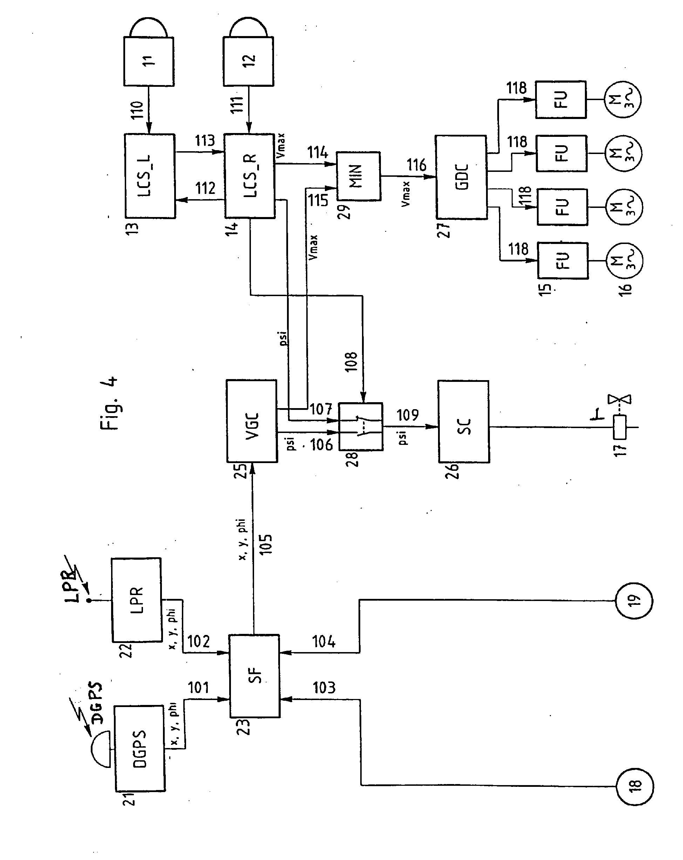

Die *Figur 4* zeigt als Blockschaltbild und Signalflussplan eine Übersicht über die Softwarefunktion des Navigations- und Fahrzeugleitsystems für einen vollautomatischen fahrerlosen Portalhubstapler. Auf dem Portalhubstapler sind die Basisstation des lokalen Funkortungssystems 22 des Fahrzeugs und der Empfänger für das satellitengestützte globale Positioniersystem 21 angeordnet. Die Empfänger 21, 22 empfangen die Signale des DGPS und des LPR (Lokales Funkortungssystem) und geben den Ist-Wert der Fahrzeugposition 101, 102 aus dem Funkortungssystem und aus dem DGPS zur Sensorfusion 23 weiter. Die Drehgeber 18, 19 am jeweils linken und am jeweils rechten Fahrzeugrad geben ein Signal zur Wegmessung 103, 104 des jeweiligen Raddrehgebers (Odometriesignal) zur Sensorfusion 23, von der ein ermittelter aktueller Ist-Wert 105 der Fahrzeugposition zur Bahnsteuerung 25 gegeben wird. Auf der rechten und auf der linken Fahrzeugseite sind Laserscanner 11, 12 angeordnet, die jeweils Rohdaten 110, 111 des vermessenen Umfeldes rechts und links des Portalhubstaplers an die Lasersteuerelektronik 13, 14 geben, und die Plausibilitätssignale 112, 113 zur Containerdetektion untereinander austauschen. Die Lasersteuerelektronik 14 auf einer Seite, im vorliegenden Fall auf der rechten Seite, errechnet den Lenkwinkel-Sollwert 107 der Laserlenkung und gibt ggf. das Umschaltsignal 108 an die Umschalteinrichtung 28 für den Lenkwinkel-Sollwert der Lasersteuerung, wenn das Fahrzeug sich dicht genug an einem Containerstapel befindet. Weiterhin kann von der Laserlenkung ein Signal zur Geschwindigkeitsbegrenzung 114 gegeben werden. Durch die Bahnsteuerung 25 kann ebenfalls ein Signal zur Geschwindigkeitsbegrenzung 115 erfolgen. Die Fahrwerksteuerung 27 gibt Drehzahl-Sollwerte 118 an die Fahrmotoren 16 der Räder. Die Umschalteinrichtung 28 für den Lenkwinkel-Sollwert wird auf der Basis des Umschaltsignals 108 und der Lenkwinkel-Sollwerte 106 107 gesteuert, wobei ein resultierender Lenkwinkel-Sollwert 109 von der Umschalteinrichtung 28 zum Lenkrechner 26 gegeben wird, der mit einem elektrischen Proportionalventil 17 für die hydraulische Lenkung in Verbindung steht. Mit diesem Navigations- und Fahrzeugleitsystem ist es möglich, einen Portalhubstapler automatisch zu lenken und zu fahren und bei Annäherung an einen Containerstapel auf die automatische Lenkung durch die Laserscanner 11, 12 umzuschalten.

Der Fahrzeuglenkrechner 26 wird durch den Lenkwinkel-Sollwert 106 der Bahnsteuerung 25 und dem Lenkwinkel-Sollwert 107 der Laserlenkung 13, 14 über die Umschalteinrichtung 28 für den Lenkwinkel-Sollwert 109 gesteuert, wobei der Lenkrechner 26 auf das elektrische Proportionalventil 17 für die hydraulische Lenkung wirkt.

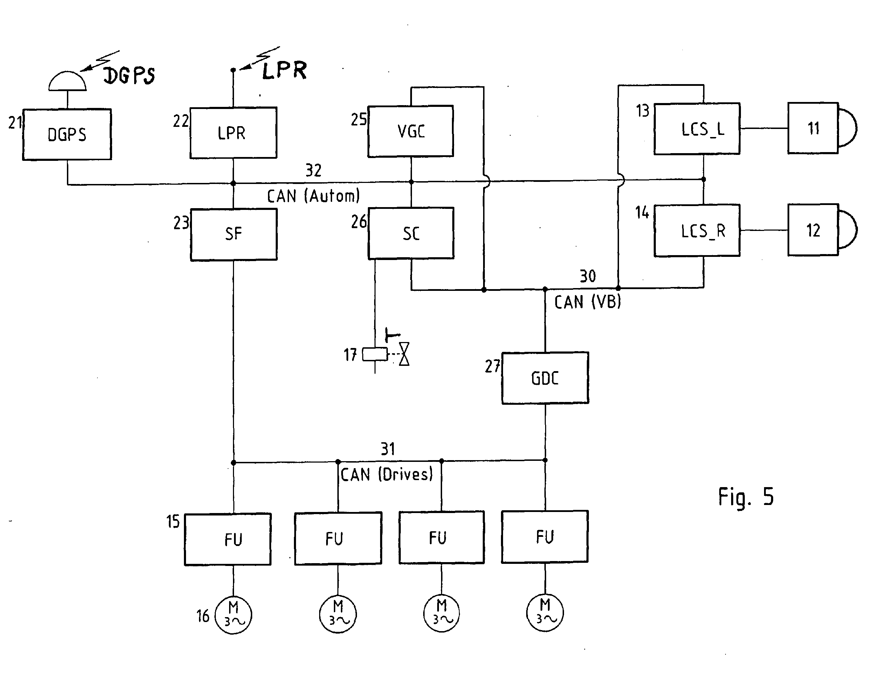

Die *Figur 5* zeigt in prinzipieller Darstellung die Hardwarestruktur des elektronischen Steuersystems des Portalhubstaplers mit einer möglichen Bustopologie. Der Portalhubstapler weist Empfänger 21 für Signale eines satellitengestützten globalen Positioniersystems und Empfänger 22 für ein lokales Funkortungssystem auf. Auf der rechten und auf der linken Seite sind Laserscanner 11, 12, angeordnet, die die Umgebung detektieren und ihre Signale an die linke und die rechte Laserscanner-Elektronik 13, 14 weitergeben und einander vergleichen. Die Anordnung von folgenden drei CAN-Bussen sind in der Figur gezeigt:

Der zentrale CAN-Bus 30 des Fahrzeuges,
der CAN-Bus 31 der Fahrzeugantriebe und
der CAN-Bus 32 der Automatisierung und der Navigation.

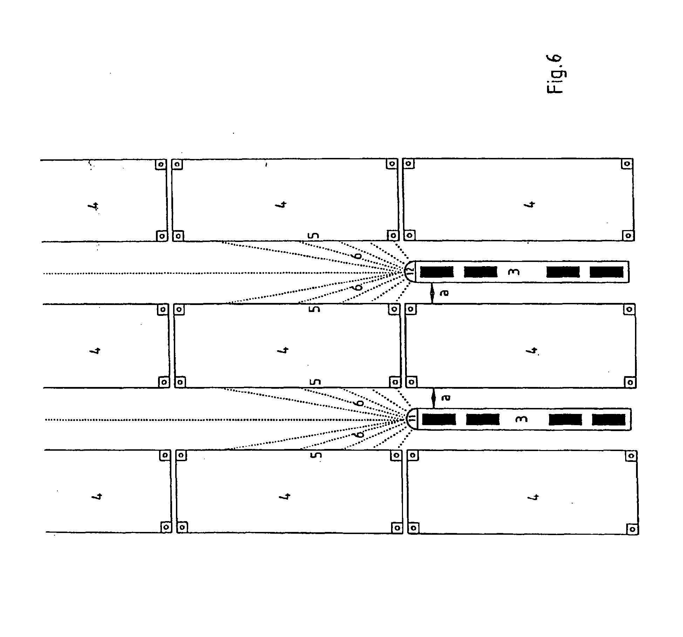

Die *Figur 6* zeigt hintereinander angeordnete Container 4, zwischen denen sich Gassen befinden, in denen der Portalhubstapler mit seinen Fahrträgern 3 verfährt, wobei ein Abstand A zur Containerwand 5 eingehalten werden muss. Die Laserscanner 11, 12 der rechten und der linken Fahrzeugseite vermessen mittels Laserstrahlen 6 den Abstand A zwischen Fahrträger 3 und Container und geben das Signal ihrer Messung an die Lasersteuerelektronik 13, 14 weiter, die in den Figuren 4 und 5 schematisch gezeigt ist, weiter.

Der vollautomatische Portalhubstapler mit lokaler Funkortung und Laserlenkung weist folgende Vorteile auf:
- Gegenüber den bekannten Lösungen mit im Boden vergrabenen TransponderNMagneten ist der technische Aufwand geringer, da die Funktransponder einfach überirdisch z.B. an Lichtmasten befestigt werden können und auch die Anzahl der benötigten Transponder erheblich geringer ist.
- Die Betriebsbehinderungen auf dem Terminal, welche während der Installation von im Boden vergrabenen Transpondern/Magneten durch die Bohrarbeiten auftreten, entfallen bei der Installation von Funktranspondern an Lichtmasten.
- Gegenüber der anderen bekannten Lösung mit einem mobilen Navigationsradar, mit mechanisch rotierender Antenne und passiven überirdischen Reflektoren, ist der technische Aufwand ebenfalls geringer, da die verschleißende und störanfällige Mechanik sowie die Regel- und Auswerteelektronik für die rotierende Antenne entfällt.

- Bei Fahrt über dem Containerstapel wird das Fahrzeug von Laserscannern präzise am tatsächlichen Containerstapel entlang gelenkt, auch wenn die Container etwas versetzt oder schräg stehen, und nicht auf einer nur virtuellen, elektronisch gespeicherten Bahn wie bei den bisher bekannten Lösungen.
- Dadurch können weniger genaue damit weniger aufwendige Navigationssysteme eingesetzt werden, da nur außerhalb der Containerstapel, wo eine präzise Lenkung nicht erforderlich ist, durch das Navigationssystem gelenkt wird.

### Liste der verwendeten Bezugzeichen

- 1: Portalhubstapler (Straddle Carrier)
- 2: Laserscanner
- 3: Fahrträger mit Rädern
- 4: Container
- 5: Containerwand
- 6: Laserstrahlen
- 7: Funktransponder
- 8:
- 9:
- 10:
- 11: Laserscanner linke Fahrzeugseite
- 12: Laserscanner rechte Fahrzeugseite
- 13: Lasersteuerelektronik links
- 14: Lasersteuerelektronik rechts
- 15: Frequenzumrichter für die Fahrmotoren
- 16: Fahrmotoren an den Rädern
- 17: Elektr. Proportionalventil für die hydraulische Lenkung
- 18: Drehgeber an einem Fahrzeugrad links (Odometrie)
- 19: Drehgeber an einem Fahrzeugrad rechts (Odometrie)
- 20:
- 21: Empfänger für DGPS
- 22: Lokales Funkortungssystem (Basisstation auf dem Fahrzeug)
- 23: Sensorfusion
- 24:
- 25: Bahnsteuerung
- 26: Lenkrechner
- 27: Fahrwerkssteuerung
- 28: Umschalteinrichtung für den Lenkwinkel-Sollwert
- 29: Minimumauswertung
- 30: Zentraler CAN-Bus des Fahrzeuges
- 31: CAN-Bus der Fahrzeugantriebe
- 32: CAN-Bus der Automatisierung und Navigation

### Signale:

- 101: Fahrzeugposition (Istwert) vom DGPS
- 102: Fahrzeugposition (Istwert) vom Funkortungssystem
- 103: Wegmesswert des linken Raddrehgebers (Odometriesignal)
- 104: Wegmesswert des rechten Raddrehgebers (Odometriesignal)
- 105: Von der Sensorfusion ermittelter aktueller Istwert der Fahrzeugposition
- 106: Lenkwinkel-Sollwert von der Bahnsteuerung
- 107: Lenkwinkel-Sollwert von der Laserlenkung
- 108: Umschaltsignal für den Lenkwinkel-Sollwert von der Lasersteuerung
- 109: Lenkwinkel-Sollwert für den Lenkrechner
- 110: Laserscanner-Rohdaten des vermessenen Umfeldes links
- 111: Laserscanner-Rohdaten des vermessenen Umfeldes rechts
- 112: Plausibilitätssignal zur Containerdetektion
- 113: Plausibilitätssignal zur Containerdetektion
- 114: Geschwindigkeitsbegrenzung von der Laserlenkung
- 115: Geschwindigkeitsbegrenzung von der Bahnsteuerung
- 116: Geschwindigkeitsbegrenzung für die Fahrwerkssteuerung
- 117:
- 118: Drehzahlsollwerte für die Fahrantriebe

### Abkürzungen:

- DGPS:: Differential Global Positioning System (Satellitengestütztes globales Positioniersystem mit differentieller Fehlerkompensation der mobilen DGPS- Empfänger durch eine ortsfeste Basisstation)
- LPR:: Local Positioning Radar (Lokales Funkortungssystem)
- SF:: Sensorfusion
- VGC:: Vehicle Guidance Controller (elektron. Bahnsteuerung, Fahrzeugleitsystem)
- SC:: Steering Computer (Lenkrechner der elektrohydraulischen Lenkung)
- GDC:: Gantry Drive Controller (elektron. Fahrwerkssteuerung)
- LCS_L: Laser Control System Left (elektron. Lasersteuerung links)
- LCS_R: Laser Control System Right (elektron. Lasersteuerung rechts)

## Patentansprüche

1. Vollautomatischer, fahrerloser Portalhubstapler zum Transportieren und Stapeln von Frachtcontainern, ausgerüstet mit mehreren verschiedenen Sensorsystemen zur Fahrzeugortung und Navigation, deren Signale in einem elektronischen Sensorfusionssystem ausgewertet, überwacht und die so ermittelten aktuellen Ortskoordinaten des Fahrzeuges dann einem System von elektronischen Steuerungen ubermittelt werden zum automatischen Lenken, Fahren und Positionieren des
Fahrzeuges auf vorgegebenen, in einer elektronischen Bahnsteuerung gespeicherten Bahnen, wobei Laserscanner zur automatischen Lenkung des Fahrzeuges über einem Containerstapel am Fahrzeug angeordnet sind,
**dadurch gekennzeichnet, dass**
eines der absoluten Sensorsysteme zur Fahrzeugortung aus einem lokalen Funkortungssystem(22) besteht, welches als eine mobile Funk- Basisstation auf dem Fahrzeug (1) angebracht ist und eine Vielzahl von Funktranspondern (7) ortfest auf der zu befahrenden Betriebsfläche angeordnet sind,
wobei eine automatische Umschalteinrichtung (28) die Lenkung von der automatischen Lenkung durch die Navigation auf die automatische Lenkung durch Laserscanner (2, 11, 12) und umgekehrt dann umschaltet, wenn das Fahrzeug (1) einen Containerstapel (4) erreicht, diesen überfährt oder verläßt.

2. Portalhubstapler nach Anspruch 1, **gekennzeichnet dadurch, dass** das lokale Funkortungssystem (22) als Basisstation des Portalhubstaplers (1) und der Empfänger (21) des Navigationssystems istwerte zur Fahrzeugposition (101, 102) zur Sensorfusion (23) geben und Drehzahlgeber (18, 19) an den Fahrzeugrädern vorhanden sind, von denen Wegmesswerte (103, 104) zur Sensorfusion (23) gehen, von der der aktuelle Istwert (105) der Fahrzeugposition an die Bahnsteuerung (25) gegeben wird.

3. Portalhubstapler nach den Ansprüchen 1 und 2, **dadurch gekennzeichnet, dass** die Umschalteinrichtung (28) für den Lenkwinkel-Sollwert (109) einen Lenkwinkel-Sollwert (106, 107) von der Bahnsteuerung (28) und der Lasersteuerelektronik (14, 15) erhält und der Lenkwinkel-Sollwert (109) an einen Lenkrechner (26) und das elektrische Proportionalventil (17) für die hydraulische Lenkung weitergibt.

4. Portalhubstapler nach den Ansprüchen 1 bis 3, **dadurch gekennzeichnet, dass** die Umschalteinrichtung (28) ein Umschaltsignal (108) für den Lenkwinkel-Sollwert (109) von der Lasersteuerelektronik (13, 14) erhält.

5. Portalhubstapler nach den Ansprüchen 1 bis 4, **dadurch gekennzeichnet, dass** Frequenzumrichter (15) an den Fahrmotoren (16) für die Räder einen DrehzahlSollwert (118) von der Fahrwerksteuerung (27) auf der Grundlage einer Minimumsauswertung (29) erhalten, in die die Geschwindigkeitsbegrenzungen (114, 115) von Bahnsteuerung (25) und Laserlenkung (13, 14) eingehen.

6. Portalhubstapler nach den Ansprüchen 1 bis 5, **dadurch gekennzeichnet, dass** die Funktransponder (7) erhöht über dem Boden angeordnet sind.

7. Portalhubstapler nach den Ansprüchen 1 bis 6, **dadurch gekennzeichnet, dass** die automatische Umschalteinrichtung (28) für die Lenkung einen elektronischen Schalter oder ein Softwareprogramm für eine elektronische Steuerung darstellt.

8. Portalhubstapler nach den Ansprüchen 1 bis 7, **dadurch gekennzeichnet, dass** am Portalhubstapler (1) mindestens zwei Laserscanner (2, 11, 12) angeordnet sind.

9. Portalhubstapler nach Anspruch 8, **dadurch gekennzeichnet, dass** der Laserscanner (2, 11, 12) einen 2D-Laserscanner darstellt.

## Claims

1. A fully automatic driverless straddle carrier for transporting and stacking freight containers equipped with a plurality of different sensor systems for vehicle location and navigation, the signals of said sensor systems being evaluated and monitored in an electronic sensor fusion system and the thus determined current coordinates of a location of a vehicle being transmitted to a system of electronic controls for automatically steering, driving and positioning the vehicle on preset paths stored in an electronic path control, wherein laser scanners are arranged at the vehicle for automatically guiding the vehicle over a container stack,
**characterized in that**
one of the absolute sensor systems for locating the vehicle location comprises a radio location system (22) which is arranged on the vehicle (1) and serves as a mobile radio base station, and thata plurality of radio transponders (7) is stationarily positioned in the traveling area of the working site,
wherein an automatic switching device (28) switches the steering system from automatic steering by navigation to automatic steering by the laser scanners (2, 11, 12) and vice versa when the vehicle (1) reaches, travels over or leaves a container stack.

2. A straddle carrier according to claim 1, **characterized in that** the local radio location system (22) as a base station of the straddle carrier (1) and the navigation system receiver (21) send actual values for vehicle position (101, 102) to the sensor fusion (23), and rotary encoders (18, 19)are arranged at the vehicle wheels, from which measured distance values (103, 104) are sent to the sensor fusion (23), from which the current actual value (105) for the vehicle position of the vehicle is passed on to the path control (25).

3. A straddle carrier according to claims 1 and 2, **characterized in that**, for the reference value (109) for the steering angle, the switching device (28) receives a reference value (106, 107) for the steering angle from the path control (28) and the laser control electronics (13, 14) and passes the reference value (109) for the steering angle on to a steering computer (26) and the electrical proportional valve (17) for hydraulic steering.

4. A straddle carrier according to claims 1 to 3, **characterized in that** the switching device (28) receives a switching signal (108) for the reference value (109) for the steering angle from the laser control electronics (13, 14).

5. A straddle carrier according to claims 1 to 4, **characterized in that** frequency converters (15) arranged at the driving motors (16) for the vehicle wheels receive a reference value (118) for the rotational speed from the traveling gear control (27) on the basis of a minimum evaluation (29), into which the speed limits (114, 115) supplied by the path control (25)and the laser control electronics (13, 14) are integrated.

6. A straddle carrier according to claims 1 to 5, **characterized in that** the radio transponders (7) are arranged in an elevated position over the ground.

7. A straddle carrier according to claims 1 to 6, **characterized in that** the automatic switching device (28) is an electronic switch or a software program for an electronic control.

8. A straddle carrier according to claims 1 to 7, **characterized in that** at least two laser scanners (2, 11, 12) are arranged at the straddle carrier (1).

9. A straddle carrier according to claim 8, **characterized in that** the laser scanner (2, 11, 12) is a two-dimensional laser scanner.

## Revendications

1. Chariot cavalier totalement automatique sans conducteur pour le transport et l'empilement de conteneurs de marchandises, équipé de plusieurs systèmes de capteurs différents pour la localisation et la navigation du véhicule, systèmes dont les signaux sont exploités, surveillés dans un système de fusion de capteurs et dont les coordonnées instantanées de localisation du véhicule ainsi recueillies sont ensuite transmises par un système de commande électronique pour la conduite, le roulage et le positionnement du véhicule sur des trajectoires pré indiquées, enregistrées dans une commande de suivi de trajectoires électronique, des scanners laser étant agencés pour le pilotage automatique du véhicule sur une pile de conteneurs sur le véhicule,
**caractérisé en ce que**
l'un des systèmes de capteurs absolus de localisation de véhicule consiste en un système radio local (22) qui est positionné comme une station de base radio mobile sur le véhicule (1) et qu'une multitude de transmetteurs radio (7) est agencé fixement sur la surface d'exploitation à couvrir,
où un dispositif de commutation (28) automatique commute alors la direction de la direction automatique par la navigation avec la direction automatique par scanner laser (2, 11, 12) et inversement, lorsque le véhicule (1) atteint, dépasse ou quitte une pile de conteneurs (4).

2. Chariot cavalier selon la revendication 1 **caractérisé en ce que** le système de localisation radio local (22) donne, en tant que station de base du chariot cavalier (1) et des récepteurs (21) du système de navigation, des valeurs réelles concernant la position du véhicule (101, 102) à la fusion des capteurs (23), et que des compteurs de tours (18, 19) sont présents sur les roues des véhicules, à partir desquels des mesures de distances (103, 104) partent vers la fusion des capteurs (23), d'où est donnée la valeur réelle instantanée (105) de la position du véhicule à la commande de suivi de trajectoire (25).

3. Chariot cavalier selon les revendications 1 et 2 **caractérisé en ce que** le dispositif de commutation (28) reçoit une valeur de consigne pour l'angle de direction (109) une valeur de consigne d'angle de direction (106, 107) de la commande de suivi de trajectoire (28) et de l'électronique de commande laser (13, 14), et transmet la valeur de consigne pour l'angle de direction (109) à un calculateur de direction (26) et à la vanne proportionnelle (17) électrique pour la direction hydraulique.

4. Chariot cavalier selon les revendications de 1 à 3 **caractérisé en ce que** le dispositif de commutation (28) reçoit un signal de commutation (108) pour la valeur de consigne d'angle de direction (109) à partir de l'électronique de commande laser (13, 14).

5. Chariot cavalier selon les revendications de 1 à 4 **caractérisé en ce que** les variateurs de fréquence (15) sur les moteurs (16) roulants pour les roues reçoivent une valeur de consigne de nombre de tours (118) de la direction du châssis (27) sur la base d'une estimation minimale (29) où sont comprises les limites de vitesses (114, 115) de la commande de trajectoire (25) et de la direction laser (13, 14).

6. Chariot cavalier selon les revendications de 1 à 5 **caractérisé en ce que** le transmetteur radio (7) est agencé en hauteur par rapport au sol.

7. Chariot cavalier selon les revendications de 1 à 6 **caractérisé en ce que** le dispositif de commutation (28) automatique pour la direction représente un commutateur électronique ou un programme software pour une commande électronique.

8. Chariot cavalier selon les revendications de 1 à 7 **caractérisé en ce qu'**au moins deux scanners laser (2, 11, 12) sont agencés sur le chariot cavalier (1).

9. Chariot cavalier selon la revendication 8 **caractérisé en ce que** le scanner laser (2, 11, 12) représente un scanner laser 2D.
